# EUROPÄISCHE PATENTANMELDUNG

(11) **EP 2 404 880 A1**
(43) Veröffentlichungstag der Anmeldung: **11.01.2012**
(21) Anmeldenummer: 11166590.7
(22) Anmeldetag: 18.05.2011
(51) Int. Cl.: C03B 3/02

(54) **Vorwärmvorrichtung zum Vorwärmen von Glasgemenge**

(30) Priorität: 07.07.2010 DE 102010026487
(71) Anmelder: ZIPPE GmbH & Co. KG, 97877 Wertheim (DE)
(72) Erfinder: Leichtenschlag, Hilmar, 63928 Eichenbühl (DE); Zippe, Philipp, Dr., 97877 Wertheim (DE); Kloss, Wolfgang, 97892 Kreuzwertheim (DE)
(74) Vertreter: von den Steinen, Axel

(57) **Zusammenfassung**

Die Erfindung betrifft eine Vorwärmvorrichtung (01, 11) zum indirekten und/oder direkten Vorwärmen von Schmelzgut (06) aus Glasscherben und/oder Glasgemenge mit Hilfe eines Wärmetauschers (03). Hierbei weist der Wärmetauscher wechselnde Schmelzgutschächte (18) und Rauchgaskanäle (17) auf, wobei ein Wärmeübergang vom Rauchgas (07) auf das Schmelzgut (06) stattfindet. Das Schmelzgut (06) wird in die eine Vorwärmvorrichtung (01, 11) eingeleitet und durchläuft eine Verteilvorrichtung (02) mittels derer das Schmelzgut (06) auf die einzelnen Schmelzgutschächte (18) verteilt wird. Hierdurch werden die Bildung eines Schmelzgutkegels oberhalb der Schmelzgutschächte (18) und ein ungleichmäßiger Materialstrom durch Verklumpen des Schmelzgutes (06) weitgehend verhindert.

## Beschreibung

Die Erfindung betrifft eine Vorwärmvorrichtung zum Vorwärmen von Schmelzgut aus Glasscherben und/oder Glasgemenge unter Nutzung von Rauchgas nach dem Oberbegriff des Anspruchs 1.

Aus dem Stand der Technik sind Wärmetauscher zum Vorwärmen von Schmelzgut aus Glasscherben und/oder Glasgemenge oder dergleichen Schüttgüter mittels Rauchgas bekannt. Bei diesen Wärmetauschern bewegt sich das Schmelzgut unter Schwerkrafteinfluss in einer Vielzahl von schmalen Schächten vertikal abwärts und wird dabei durch indirekten oder direkten Wärmeübergang durch das ebenfalls durch den Wärmetauscher strömende Rauchgas erwärmt.

Die bekannten Wärmetauscher zur Erwärmung des Schmelzgutes funktionieren problemlos, solange das vorzuwärmende Schüttgut trocken ist. Denn das trockene Schüttgut fließt in den Kanälen des Wärmetauschers unter Einfluss der Schwerkraft gut nach unten ab, ohne dass es zu Verklebungen oder Anbackungen oder letztendlich zu blockierenden Brückbildungen kommt. Dies gilt auch in gewissem Maße noch für Glasscherben im feuchten Zustand, denn zwischen den Glasscherben bilden sich genügend Hohlräume aus, durch welche der beim Vorwärmen entstehende Wasserdampf nach oben aus dem Wärmetauscher entweichen kann. Gleichfalls neigen auch feuchte Glasscherben nicht zum Verklumpen. Wenn es sich jedoch bei dem vorzuwärmenden Schmelzgut anstelle reiner Glasscherben um ein feuchtes Glasgemenge mit einem geringen oder ohne Anteil von Glasscherben handelt, was die Regel ist, versagen die einfachen Ausführungen von Wärmetauschern.

Für diesen Fall schlägt die Patentschrift DE 10 2008 030 161 B3 vor, in den Trennwänden zwischen den Rauchgaskanälen und den Schmelzgutschächten geeignete Absaug- bzw. Entdampfungsöffnungen vorzusehen. Diese sind derart ausgelegt, dass sie für das Schmelzgut im Wesentlichen undurchlässig sind, jedoch der Wasserdampf durchtreten kann. Aufgrund des Staudrucks in den Schmelzgutschächten und des hierbei geringeren Widerstands in den Rauchgaskanälen führt dies des Weiteren dazu, dass das Rauchgas nicht durch die Absaugöffnungen in das Schmelzgut übertritt. Insofern wird ermöglicht, den entstehenden Wasserdampf durch die Vorwärmung des Schmelzgutes vom Schmelzgutschacht in den Rauchgaskanal übertreten zu lassen und somit unschädlich für den Vorwärmprozess abführen zu können.

In der Anwendung hat sich jedoch gezeigt, dass je weiter man zum Beginn des Wärmetauschers gelangt, insbesondere im Bereich oberhalb der Schmelzgutschächte, keine effektive Absaugung des entstehenden Wasserdampfs mehr stattfindet. Dies liegt letztendlich darin begründet, dass der Wasserdampf unverändert in einem geringen Teil in den Schmelzgutschächten aufsteigt und sich somit im oberen Bereich sammelt.

Die Beschickung des Wärmetauschers erfolgt in aller Regel derart, dass oberhalb der Mehrzahl der Schmelzgutschächte ein Verteilraum vorhanden ist, in dem zentral das Schmelzgut aufgegeben wird und in dem sich dann ein gewisser Schüttgutkegel auf der Mehrzahl der Schmelzgutschächte bildet. Insbesondere in diesem Schüttgutkegel oberhalb der Schmelzgutschächte kommt es besonders zu problematischen Verklebungen im Schmelzgut aufgrund des aufsteigenden Wasserdampfs. Wenngleich durch die vorbenannte Lösung eine deutliche Verbesserung gegenüber dem üblichen Stand der Technik geschaffen wurde, verbleibt dennoch ein Problem mit Verklebungen innerhalb des Schmelzgutes. Dies erschwert unverändert den Durchfluss des Schmelzgutes durch die Mehrzahl von Schmelzgutschächten. Insbesondere hinderlich ist diese Verklebung im Schüttgutkegel oberhalb der Schmelzgutschächte dahingehend, dass keine gleichmäßige Verteilung des Schmelzgutes in die einzelnen Schmelzgutschächte erfolgt und somit deutlich unterschiedliche Durchlaufgeschwindigkeiten eintreten. Somit liegt naheliegenderweise keine gleichmäßige Erwärmung im Schmelzgut vor, was jedoch Zweck des Wärmetauschers ist.

Aufgabe der vorliegenden Erfindung ist es daher, einen ungehinderten Durchfluss durch den Wärmetauscher zu ermöglichen, ohne dass es hierbei zu Verklebungen innerhalb des Schmelzgutes kommen kann.

Diese Aufgabe wird durch eine Vorwärmvorrichtung nach der Lehre des Anspruchs 1 gelöst.

Vorteilhafte Ausführungsformen der Erfindung sind Gegenstand der Unteransprüche.

Die gattungsgemäße Vorwärmvorrichtung zum indirekten und/oder direkten Vorwärmen von Schmelzgut aus Glasscherben und/oder Glasgemenge weist als wesentlichen Bestandteil einen Wärmetauscher auf. Hierbei besitzt der Wärmetauscher primärseitig mehrere Schmelzgutschächte mit jeweils zumindest einer Einlassöffnung. Sekundärseitig besitzt der Wärmetauscher mehrere jeweils durch Wände von den Schmelzgutschächten getrennte und von Rauchgas durchströmte Rauchgaskanäle. Das Schmelzgut kann nunmehr von einer Schmelzgutaufgabe der Vorwärmvorrichtung durch die Einlassöffnungen und durch die Schmelzgutschächte zu einer Schmelzgutausgabe der Vorwärmvorrichtung gefördert werden. Hierbei kann die im Rauchgas enthaltene Wärme vom Rauchgas durch die Wände auf das Schmelzgut übertragen werden. Insofern umfasst die Vorwärmvorrichtung einen allgemeinen aus dem Stand der Technik bekannten Wärmetauscher mit entsprechend getrennter Anordnung von Schmelzgutschächten und Rauchgaskanälen. Hinsichtlich der erfinderischen Ausführung ist es hierbei unerheblich, ob, wie aus dem Stand der Technik bekannt, die Wände zwischen Schmelzgutschächte und Rauchgaskanäle vollständig geschlossen und somit diese voneinander getrennt sind oder ob diese eine Durchlässigkeit für Wasserdampf bzw. Gas bieten. Maßgeblich ist, dass es eine Mehrzahl von Schmelzgutschächten gibt, in denen entsprechendes Schmelzgut gefördert werden kann, wobei Wärmeenergie auf das Schmelzgut übertragen wird.

Erfindungsgemäß ist vorgesehen, dass in der Vorwärmvorrichtung weiterhin zwischen der Schmelzgutaufgabe und den Einlassöffnungen am Beginn der Schmelzgutschächte eine Verteilvorrichtung angeordnet ist, wobei das Schmelzgut von der Schmelzgutaufgabe in die Verteilvorrichtung eingeleitet wird und mit zumindest einem Verteilelement eine Verteilung des Schmelzgutes auf die Mehrzahl von Eintrittsöffnungen erfolgt.

Durch die nunmehr neu geschaffene Ausführung mit der Verteilvorrichtung und einem Verteilelement ist es ermöglicht, der problematischen Bildung eines Schüttgutkegels und einer Verklumpung aufgrund des Wasserdampfs gegenzuwirken und mittels dem Verteilelement eine deutlich verbesserte Verteilung des zugeführten Schmelzgutes auf die Mehrzahl von Schmelzgutschächten zu realisieren. Insofern wird zum einen das Verklumpen aufgrund des Verteilelements reduziert und zum anderen der Bildung eines Schüttgutkegels entgegengewirkt.

Besonders vorteilhaft ist die Ausführung mit der erfindungsgemäßen Vorwärmvorrichtung, wenn die Schmelzgutaufgabe zentral oberhalb der Verteilvorrichtung angeordnet ist. Entsprechend der Aufgabe der Verteilvorrichtung, mit dem zumindest einem Verteilelement die Verteilung des Schmelzgutes zu realisieren, ist dies vorteilhaft ermöglicht, wenn entsprechend die Schmelzgutzuführung oberhalb des Verteilelements erfolgt.

Besonders vorteilhaft hat sich erwiesen, wenn die Verteilvorrichtung zwei Stufen von Verteilelementen aufweist. Hierunter ist zu verstehen, dass das Schmelzgut im Verlauf von der Schmelzgutaufgabe zu den Schmelzgutschächten eine erste Stufe mit zumindest einem Verteilelement passiert und im Folgenden eine zweite Stufe mit zumindest einem Verteilelement passiert. Insbesondere aufgrund der im allgemeinen anzutreffenden rechteckigen Bauweise der Wärmetauscher mit den parallel angeordneten länglichen Einlassöffnungen und einer zentralen Schmelzgutzuführung ist die Verteilung auf die Einlassöffnungen vorteilhaft, wenn entsprechend zwei Stufen eingesetzt werden.

Weiterhin vorteilhaft ist in diesem Fall, wenn in einer ersten Stufe ein unbewegtes Verteilelement, insbesondere ein Verteilblech, eingesetzt wird. Durch die Realisierung des Verteilelements durch ein unbewegtes Element, insbesondere einem Verteilblech, ist zum einen eine sehr kostengünstige Lösung ermöglicht. Des Weiteren ermöglicht bereits diese Ausführungsform die Verteilung des Schmelzgutstroms von der Schmelzgutaufgabe auf die Mehrzahl der Einlassöffnungen.

Um den Schmelzgutstrom nicht nachteilig zu behindern, ist es besonders vorteilhaft, wenn das unbewegte Verteilelement hängend und im Wesentlichen waagrecht ausgerichtet unterhalb der Schmelzgutzuführung angeordnet ist. Durch die aufgehängte Bauweise ist es möglich, lediglich an den jeweiligen Ecken des Verteilelements dünne Streben vorzusehen, welche somit den Schmelzgutstrom nur minimal behindern. Die waagrechte Ausrichtung des Verteilelements ist zweckmäßig, da somit die gleichmäßige Verteilung des Schmelzgutstroms auf die Mehrzahl der Einlassöffnungen bestmöglich gewährleistet ist, sofern das Verteilelement mittig oberhalb der Mehrzahl der Einlassöffnungen angeordnet ist. Sofern das Verteilelement nicht mittig angeordnet ist bzw. die Schmelzgutaufgabe ebenso nicht zentral angeordnet ist, kann es ebenso von Nöten sein, das Verteilelement nicht waagrecht sondern vielmehr schräg anzuordnen. Dies erhöht jedoch deutlich den Aufwand zur Einstellung der für den Prozess vorteilhaften Lage und somit der Schmelzgutverteilung.

Der Einsatz eines einfachen Verteilblechs ist zum einen kostengünstig und zum anderen effektiv. Hierbei kann in einfachster Ausführungsform ein ebenes Blech eingesetzt werden. Gleichfalls ist es jedoch auch denkbar, ein profiliertes oder vorgeformtes Blech einzusetzen, um somit den Fluss des Schmelzgutes vorteilhaft vom Verteilelement auf die Einlassöffnungen zu begünstigen. Insofern ist das Verteilblech nicht zwingenderweise eben, sondern kann ebenso eine hiervon abweichende Form aufweisen.

Entsprechend der bestehenden Gefahr aus dem Prozess zu Verklumpungen wird vorteilhafterweise in einer, insbesondere zweiten, Stufe zumindest ein bewegtes Verteilelement eingesetzt. Durch den Einsatz eines bewegten Verteilelements wird es erreicht, dass ansetzende Verklumpungen durch das Verteilelement aufgebrochen und wiederum verteilt werden. Bei der Kombination einer ersten Stufe eines Verteilelements mit einer zweiten Stufe eines Verteilelements wird vorteilhafterweise das bewegte Verteilelement als zweite Stufe unterhalb der ersten Stufe eingesetzt. Vorteilhafterweise eignet sich insbesondere ein rotierender Verteilrührer als Verteilelement.

Für die Anordnung des Verteilrührers und dessen Ausführung ergeben sich verschiedene Möglichkeiten, wobei sich eine waagrechte Drehachse als vorteilhaft erwiesen hat. Zur Erzielung entsprechender Rührwirkung bzw. Verteilung des Schmelzgutes ist der Einsatz einer Mehrzahl an Rührflügeln als Bestandteil des Verteilrührers besonders vorteilhaft.

Aufgrund der vorwiegend rechteckigen Bauform des Wärmetauschers hat es sich weiterhin als vorteilhaft gezeigt, wenn zwei Verteilrührer als Verteilelemente im unteren Bereich der Verteilvorrichtung angeordnet sind. Insbesondere vorteilhaft ist hierbei die Wahl zweier Verteilrührer mit parallelen Drehachsen, wobei diese vorzugsweise waagrecht angeordnet sind. Insofern kann durch diese beiden Verteilrührer die vorteilhafte Durchmischung bzw. Verteilung des Schmelzgutes oberhalb der Einlassöffnungen erzielt werden.

Zur Vermeidung von Bereichen, welche nicht vom Verteilrührer überdeckt werden, und somit einen potentiellen Schmelzgutstrom von der Schmelzgutaufgabe in die Einlassöffnungen zulassen ohne von den Veteilrührern getroffen zu werden, ist es besonders vorteilhaft, wenn die Rührflügel von einem Verteilrührer in Bezug zum anderen Verteilrührer in Richtung der Drehachse und/oder rotatorisch versetzt angeordnet sind. Insofern ist es hierdurch ermöglicht, die Drehachsen der Verteilrührer in einem Abstand geringer als der Durchmesser der Rührflügel anzuordnen und somit ein Kämmen der beiden Verteilrührer zu realisieren.

Vorteilhafterweise weisen die Verteilrührer hierbei eine gegenläufige Drehbewegung auf. Dadurch wird insbesondere eine gute Mischung und Verteilung des Schmelzgutes vor den Einlassöffnungen erreicht.

Weiterhin ist es möglich, die Verteilvorrichtung, insbesondere in der zweiten Stufe, mit einer Mehrzahl an Verteilrührern auszuführen, wobei beispielsweise drei oder mehr Verteilrührer mit horizontaler Drehachse parallel zueinander angeordnet werden. Ebenso wäre es denkbar, die Verteilrührer in zwei Ebenen übereinander und miteinander kämmend vorzusehen.

Die vorteilhafte Wahl der Anzahl an Verteilrührern wird insbesondere von den Größenverhältnissen abhängen. Insofern wird bei einem großen Wärmetauscher eine höhere Verteilleistung notwendig werden als bei einem kleinen Wärmetauscher, bei dem der Abstand von den äußeren Einlassöffnungen zueinander gering ist.

In aller Regel werden die Schmelzgutschächte im Wesentlichen senkrecht stehen. Hierbei kommt die erfinderische Ausführungsform besonders zur Geltung, wenn die Dicke der Schmelzgutschächte als Abstand zwischen den zwei umgebenden Rauchgaskanälen einen geringen Wert im Verhältnis zur Breite und/oder Höhe aufweist. Wenngleich das Verhältnis der Breite zur Höhe keine Relevanz besitzt, wird doch in aller Regel die Breite der Schmelzgutschächte und somit des Wärmetauschers geringer sein, als dessen Höhe. Der im Verhältnis geringere Wert der Dicke der Schmelzgutschächte im Verhältnis zur Breite ist gegeben bei einem Verhältnis von beispielsweise 1:5 oder bevorzugt weitergehend 1:15. Aufgrund dieses Verhältnisses ist es insbesondere problematisch, dass der Strom des Schmelzgutes durch die Einlassöffnungen und die Schmelzgutschächte gleichmäßig verläuft und erfordert insbesondere die erfindungsgemäße Lösung.

Je geringer die Dicke im Verhältnis zur Breite ist, umso größer wird die Gefahr von Verklumpungen und Blockierungen des Schmelzgutstroms. Zugleich erhöht sich die Problematik des gleichmäßigen Eintritts in die Eintrittsöffnungen der einzelnen Schmelzgutschächte. Jedoch ist hierbei ein entsprechendes Verhältnis vorteilhaft zur Wärmeübertragung vom Rauchgaskanal auf den Schmelzgutschacht. Entgegengesetzt würde zwar eine große Dicke im Verhältnis zur Breite hingehend zu einem quadratischen Querschnitt vorteilhaft sein, was den Durchfluss des Schmelzgutes betrifft, jedoch wird hierbei der Wärmeübergang besonders nachteilig.

Aufgrund des bekanntlich entstehenden Wasserdampfs aufgrund der Vorwärmung von einem Glasgemenge ist es vorteilhaft, dass die Verteilvorrichtung eine Dampfabsaugung aufweist. Insofern wird es hierdurch ermöglicht, den oberhalb des Wärmetauschers freigesetzten Wasserdampf gezielt absaugen zu können, um somit dessen Verbleib im Schmelzgut zu reduzieren.

Weiter verbessert werden kann die Effektivität und die Prozesssicherheit der Vorwärmvorrichtung, wenn das Schmelzgut vor der Schmelzgutaufgabe an der Vorwärmvorrichtung eine Vorstufe, insbesondere eine Trocknungsvorrichtung, durchläuft. Durch diese Vorstufe wird es ermöglicht, die Temperatur des Schmelzgutes zu erhöhen und/oder den Feuchtegehalt zu reduzieren. Hierbei ist es insbesondere vorteilhaft, wenn der Feuchtegehalt reduziert wird, wobei dies im Allgemeinen einhergeht mit einer notwendigen Temperaturerhöhung. Insofern bezieht sich die Erhöhung der Temperatur auf die Differenz vom Schmelzgut vor der Vorstufe, d.h. insbesondere der Umgebungstemperatur in einem beispielhaften Schmelzgutsilo und der Temperatur des Schmelzgutes im Zustand der Zuführung in der Schmelzgutaufgabe zur Vorwärmvorrichtung.

Besonders vorteilhaft ist es in diesem Falle, wenn in der Trocknungsvorrichtung erwärmte Luft direkt in das Schmelzgut eingeleitet wird, wobei aus dem Schmelzgut freiwerdender Wasserdampf mit der Luft aus der Trocknungsvorrichtung abgeführt werden kann. Die direkte Durchleitung der Luft durch das Schmelzgut ist im Gegensatz zum Rauchgas unproblematisch hinsichtlich der Qualität des Schmelzgutes. Hingegen ist die direkte Durchleitung von erwärmter Luft zum einen vorteilhaft hinsichtlich der Wärmeübertragung, da somit die Wärme nicht über Trennwände geleitet werden muss. Zum anderen ist die direkte Durchleitung besonders vorteilhaft, da hierdurch frei werdender Wasserdampf mit der strömenden Luft abgeführt werden kann. Somit kann besonders effektiv die Feuchtigkeit im Schmelzgut reduziert werden und der nachfolgende Vorwärmprozess positiv beeinflusst werden.

Zur Gewinnung erwärmter Luft hat es sich als vorteilhaft erwiesen, ebenfalls die Wärme des Rauchgases einzusetzen. Zu diesem Zwecke wird die Vorwärmvorrichtung um einen Luftwärmer erweitert. Hierzu gibt es verschiedene Möglichkeiten, aus denen der Fachmann je nach Auslegung der Gesamtanlage wählen wird. Zum einen können Luftkanäle in die im Wärmetauscher vorhandenen Rauchgaskanäle eingebracht werden. Beispielhaft sei als mögliche Anordnung die Abfolge der Kanäle angeführt mit einem Luftkanal folgend einem Rauchgaskanal folgend einem Schmelzgutschacht folgend ein Rauchgaskanal folgend ein Luftkanal usw. Somit ist der Luftwärmer im Wärmetauscher integriert. Gleichfalls besteht die Möglichkeit, den Luftwärmer dem Wärmetauscher zugeordnet anzuordnen und die Rauchgaskanäle im Luftwärmer fortzuführen. Ebenso kann der Luftwärmer freistehend mit getrennt verlaufenden Rauchgas- und Luftkanälen versehen sein, um mit der Durchströmung von Rauchgas und Luft die Erwärmung der Luft zu erzielen.

Da jedoch die notwendige Wärmemenge in der Luft gering ist im Gegensatz zur Wärmeübertragung auf das Schmelzgut im Wärmetauscher, hat es sich als vorteilhaft gezeigt, den Luftwärmer flächig direkt am Wärmetauscher anzubringen und nur von der Luft durchströmen zu lassen. Die Wärmeübertragung erfolgt vom insgesamt deutlich wärmeren Wärmetauscher über dessen Außenwand auf die Luft im Luftwärmer.

Entsprechend der erfinderischen Vorwärmvorrichtung lässt sich hieraus ein neues Verfahren ableiten, welches dadurch gekennzeichnet ist, dass ein Schmelzgut aus Glasscherben und/oder Glasgemenge bei einer Vorwärmvorrichtung ausgehend von einer, insbesondere zentralen, Schmelzgutaufgabe eine Verteilvorrichtung mit zumindest einem Verteilelement durchläuft und im Nachfolgenden durch eine Mehrzahl von Eintrittsöffnungen in die jeweiligen Schmelzgutschächte gelangt. Durch diese Schmelzgutschächte wird das Schmelzgut hindurchgeleitet und zugleich erwärmt. Die Durchleitung des Schmelzgutes durch die Schmelzgutschächte bzw. durch die Vorwärmvorrichtung erfolgt im Wesentlichen durch die Schwerkraft.

Vorteilhafterweise erfolgt die Verteilung in der Verteilvorrichtung mittels Verteilblech und/oder Verteilrührer. Insofern leiten die Verteilelemente bzw. das Verteilelement den Strom des Schmelzgutes um und verhindern somit die Bildung eines Schüttgutkegels oberhalb des Wärmetauschers.

In Erweiterung ist besonders vorteilhaft das Schmelzgut zunächst mit erwärmter Luft zu durchströmen, wobei Wasserdampf aus dem Schmelzgut mit der Luft ausgetragen wird. Im Nachfolgenden erfolgt die Zuführung des erwärmten Schmelzgutes zur Verteilvorrichtung.

Beispiele für eine erfindungsgemäße Vorwärmvorrichtung werden in folgenden Zeichnungen skizziert.

Es zeigen:
- Fig. 1: eine Schemaskizze für die beispielhafte Anordnung der erfindungsgemäßen Vorrichtung mit Andeutung der Stoffströme;
- Fig. 2: eine Ansicht eines Ausführungsbeispiels einer Vorwärmvorrichtung mit einer Verteilvorrichtung;
- Fig. 3: eine Schemaskizze einer erweiterten beispielhafte Anordnung der erfindungsgemäßen Vorrichtung.

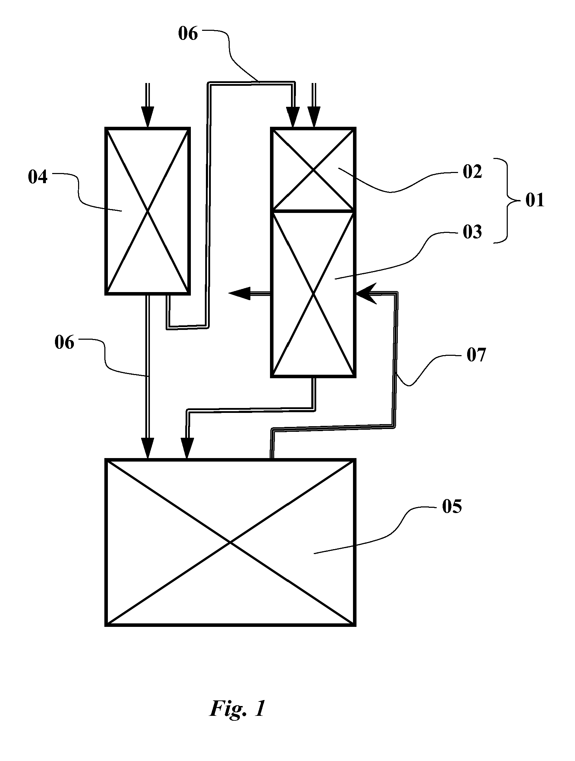

Die **Figur 1** soll schematisch den Strom des Schmelzgutes 06 skizzieren. Dies ist lediglich als Beispiel zu verstehen, als dass es ebenso eine Vielzahl alternativer Möglichkeiten gibt. Entsprechend der Aufgabe der Vorwärmvorrichtung 01, ein Schmelzgut 06 zu erwärmen, ist es zunächst erforderlich, einen Vorrat an Schmelzgut 06 aufzuweisen. Hierzu wird üblicherweise ein Schmelzgutsilo 04 eingesetzt, welcher eine beliebige Form sowie eine beliebige Größe aufweisen kann. Unter Weglassung der Vorwärmvorrichtung 01 ist es im Allgemeinen möglich, das Schmelzgut 06 ebenso direkt vom Schmelzgutsilo 04 dem Verwendungsort des Schmelzgutes 06 einem im Allgemeinen anzutreffenden Schmelzofen 05 zuzuführen. Zur Vorwärmung des Schmelzgutes 06 wird nunmehr das Schmelzgut 06 vom Schmelzgutsilo 04 zur Vorwärmvorrichtung 01 zugeführt. Ebenso wäre es denkbar, eine direkte Materialanlieferung der Vorwärmvorrichtung 01 zuzuführen. Insofern zeigt es sich, dass es unerheblich ist, von wo aus das Schmelzgut 06 der Vorwärmvorrichtung 01 zugeführt wird.

Die Vorwärmvorrichtung 01 besteht erfinderisch aus dem allgemein bekannten Wärmetauscher 03 nach dem Stand der Technik sowie der neu geschaffenen Verteilvorrichtung 02. Der Wärmetauscher 03 dient hierbei zur Übertragung von Wärmeenergie von Rauchgas 07 in das Schmelzgut 06. Hierbei stammt das Rauchgas 07 aus dem Prozess vom Schmelzofen 05. Die Art der Durchleitung des Rauchgases 07 und dessen Kanalform im Wärmetauscher 03 ist hinsichtlich der erfindungsgemäßen Ausführung nebensächlich. Gleichfalls ist dem Fachmann offensichtlich, dass es für die erfindungsgemäße Lösung unerheblich ist, ob Rauchgas 07 als Heizmedium eingesetzt wird oder ein anderes Mittel, wie z.B. erhitztes Ö1, wenngleich die Ausführung mit der Anwendung von Rauchgas 07 wirtschaftlich besonders vorteilhaft ist. Zur erkennen ist weiterhin die Anordnung der erfindungsgemäßen Verteilvorrichtung 02 oberhalb des Wärmetauschers 03.

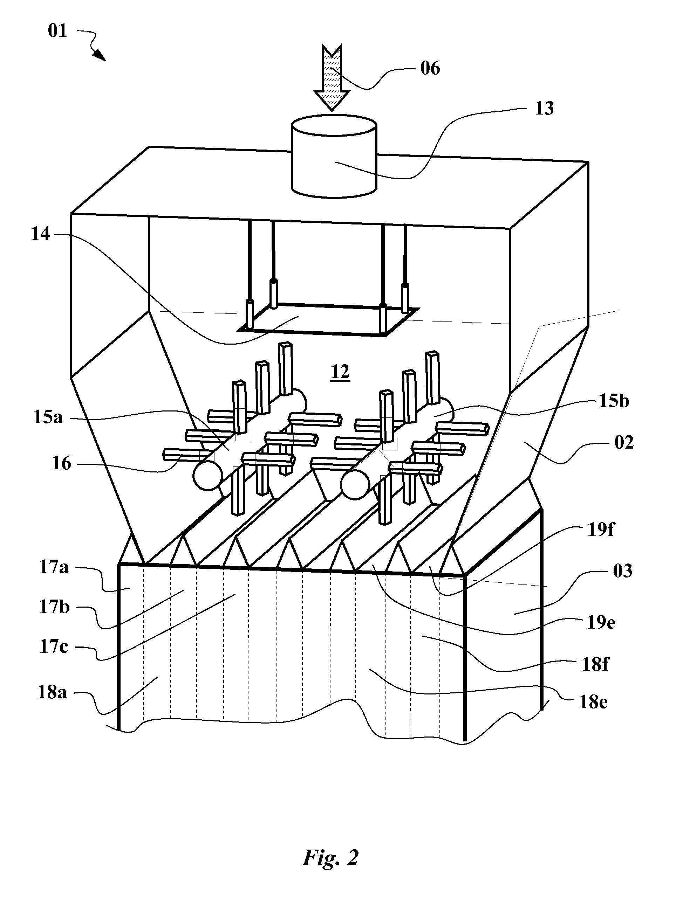

In der **Figur 2** wird die erfindungsgemäße Ausführung anhand eines Beispiels verdeutlicht. Hierbei ist wiederum im oberen Bereich die Verteilvorrichtung 02 und im unteren Bereich der Wärmetauscher 03 dargestellt. Zu erkennen ist die Mehrzahl an skizzierten Rauchgaskanälen 17 abwechselnd mit der Mehrzahl der Schmelzgutschächte 18. Weiterhin ist offensichtlich, dass jeder Schmelzgutschacht 18 in diesem Beispiel eine Einlassöffnung 19 aufweist. Insofern trennen diese den Bereich zwischen der Verteilvorrichtung 02 und dem jeweiligen Schmelzgutschacht 18 bzw. dem Wärmetauscher 03. Oberhalb der Verteilvorrichtung 02 erfolgt die Beschickung mit dem Schmelzgut 06 in die Schmelzgutaufgabe 13 an der Vorwärmvorrichtung 01. Zentral mittig angeordnet ist in diesem Beispiel eine erste Stufe eines Verteilelements in Form eines Verteilblechs 14. Dieses ist an Stäben zentral unterhalb der Schmelzgutaufgabe 13 angeordnet. Der Strom des Schmelzguts 06 verteilt sich mittels des Verteilblechs 14 und verhindert somit bereits die Bildung eines Schüttgutkegels. Im Verteilraum 12 der Verteilvorrichtung 02 sind weiterhin als zweite Stufe der Verteilvorrichtung zwei Verteilrührer 15a, 15b platziert. Diese weisen eine waagrechte Drehachse auf und besitzen jeweils eine Mehrzahl von Rührflügeln 16. Hierdurch wird eine optimale Durchmischung und Verteilung des Schmelzgutes 06 auf die Mehrzahl der Einlassöffnungen 19 erreicht. Die Ausbildung der Rührflügel 16 ist zunächst nebensächlich, wenngleich sich quadratische bzw. rautenförmige Stäbe als besonders effektiv und zugleich kostengünstig gezeigt haben.

Wenngleich nicht dargestellt, ist es für den Fachmann offensichtlich, dass es ebenso möglich ist, die Rührflügel 16 derart anzuordnen, dass die beiden Verteilrührer 15 miteinander kämmen können.

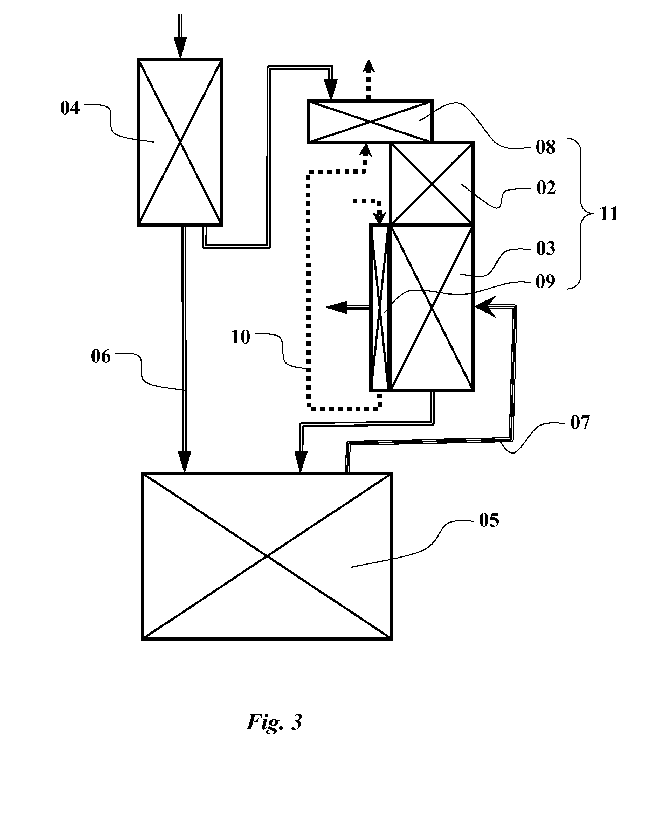

Die **Figur 3** skizziert schematisch eine zur Fig. 1 erweiterte beispielhafte Ausführungsform einer Anlage mit einer erfindungsgemäßen Vorwärmvorrichtung 11. In Abwandlung zu Fig. 1 ist an dem Wärmetauscher 03 ergänzend ein Luftwärmer 09 angeordnet. Dieser kann sowohl, wie skizziert, gleichfalls vom Rauchgas 07 durchströmt sein, als auch lediglich direkt am Wärmetauscher 03 flächig angebracht sein. Zumindest wird die im Rauchgas 07 enthaltene Wärme im Wärmetauscher 03 abgegeben und zum einen auf das Schmelzgut 06 übertragen und zum anderen auf die durch den Luftwärmer 09 strömende Luft 10 entweder über den Wärmetauscher 03 oder über im Luftwärmer 09 verlaufende Rauchgaskanäle. Die durch den Luftwärmer 09 strömende Luft 10 wird im einfachsten Falle Umgebungsluft sein, welche direkt am Luftwärmer 09 eingesaugt wird.

Die derart erwärmte Luft 10 wird im Folgenden einer Trocknungsvorrichtung 08 zugeführt. Durch diese wird gleichfalls der Schmelzgutstrom 06 geführt. Hierbei durchströmt die Luft 10 direkt das Schmelzgut 06. Dabei erwärmt sich das Schmelzgut 06 und darin enthaltenes bzw. gebundenes Wasser wird zumindest teilweise in Form von Wasserdampf abgegeben. Dieser Wasserdampf kann nunmehr durch die strömende Luft 10 ausgetragen werden. Insofern findet durch die Trocknungsvorrichtung eine erste Erwärmung des Schmelzgutes 06 statt, wobei der Wassergehalt reduziert wird.

## Patentansprüche

1. Vorwärmvorrichtung (01, 11) zum indirekten und/oder direkten Vorwärmen von Schmelzgut (06) aus Glasscherben und/oder Glasgemenge mit einem Wärmetauscher (03), wobei der Wärmetauscher primärseitig mehrere Schmelzgutschächte (18) mit jeweils zumindest einer Einlassöffnung (19) aufweist und sekundärseitig mehrere jeweils durch Wände von den Schmelzgutschächten (18) getrennte und von Rauchgas (07) durchströmte Rauchgaskanäle (17) aufweist, wobei das Schmelzgut (06) von einer Schmelzgutaufgabe (13) der Vorwärmvorrichtung (01, 11) durch die Einlassöffnungen (19) und durch die Schmelzgutschächte (18) zu einer Schmelzgutausgabe der Vorwärmvorrichtung (01, 11) gefördert werden kann, und wobei die im Rauchgas (07) enthaltene Wärme vom Rauchgas (07) durch die Wände auf das Schmelzgut (06) übertragen werden kann,
**dadurch gekennzeichnet,**
**dass** in der Vorwärmvorrichtung (01, 11) weiterhin zwischen der Schmelzgutaufgabe (13) und den Einlassöffnungen (19) eine Verteilvorrichtung (02) angeordnet ist, wobei das Schmelzgut (06) von der Schmelzgutaufgabe (13) in die Verteilvorrichtung (02) eingeleitet wird und mit zumindest einem Verteilelement (14, 15) eine Verteilung des Schmelzgutes (06) auf die Mehrzahl von Eintrittsöffnungen (19) erfolgt.

2. Vorwärmvorrichtung (01 , 11) nach Anspruch 1,
**dadurch gekennzeichnet,**
**dass** die Schmelzgutaufgabe (13) zentral oberhalb der Verteilvorrichtung (02) angeordnet ist.

3. Vorwärmvorrichtung (01, 11) nach Anspruch 1 oder 2,
**dadurch gekennzeichnet,**
**dass** die Verteilvorrichtung (02) zwei Stufen von Verteilelementen (14, 15) aufweist.

4. Vorwärmvorrichtung (01, 11) nach einem der Ansprüche 1 bis 3,
**dadurch gekennzeichnet,**
**dass** in einer, insbesondere ersten, Stufe zumindest ein unbewegtes Verteilelement, insbesondere ein Verteilblech (14), eingesetzt wird.

5. Vorwärmvorrichtung (01, 11) nach Anspruch 4,
**dadurch gekennzeichnet,**
**dass** das Verteilelement (14) hängend und im Wesentlichen waagerecht ausgerichtet unterhalb der Schmelzgutaufgabe (13) angeordnet ist.

6. Vorwärmvorrichtung (01, 11) nach einem der Ansprüche 1 bis 5,
**dadurch gekennzeichnet,**
**dass** in einer, insbesondere zweiten, Stufe zumindest ein bewegtes Verteilelement, insbesondere ein rotierender Verteilrührer (15), eingesetzt wird.

7. Vorwärmvorrichtung (01, 11) nach Anspruch 6,
**dadurch gekennzeichnet,**
**dass** der Verteilrührer (15) eine waagerechte Drehachse aufweist und eine Mehrzahl an Rührflügeln (16) besitzt.

8. Vorwärmvorrichtung (01, 11) nach Anspruch 6 oder 7,
**dadurch gekennzeichnet,**
**dass** zwei Verteilrührer (15a, 15b) als Verteilelemente im unteren Bereich der Verteilvorrichtung (02) angeordnet sind.

9. Vorwärmvorrichtung (01, 11) nach Anspruch 8,
**dadurch gekennzeichnet,**
**dass** die Rührflügel (16) vom einen Verteilrührer (15a) in Bezug zum anderen Verteilrührer (15b) in Richtung der Drehachse und/oder rotatorisch versetzt angeordnet sind und die Rührflügel (16) der beiden Verteilrührer (15a, 15b) miteinander kämmen.

10. Vorwärmvorrichtung (01, 11) nach Anspruch 8 oder 9,
**dadurch gekennzeichnet,**
**dass** die Verteilrührer (15a, 15b) eine gegenläufige Drehbewegung aufweisen.

11. Vorwärmvorrichtung (01, 11) nach einem der Ansprüche 1 bis 10,
**dadurch gekennzeichnet,**
**dass** die Schmelzgutschächte (18) im Wesentlichen senkrecht stehen, wobei die Dicke der Schmelzgutschächte (18) als der Abstand zwischen zwei umgebenden Rauchgaskanälen (17) einen geringen Wert im Verhältnis zur Breite und/oder Höhe aufweist.

12. Vorwärmvorrichtung (01 , 11) nach einem der Ansprüche 1 bis 11,
**dadurch gekennzeichnet,**
**dass** die Verteilvorrichtung (02) eine Dampfabsaugung aufweist.

13. Vorwärmvorrichtung (01, 11) nach einem der Ansprüche 1 bis 12,
**dadurch gekennzeichnet,**
**dass** das Schmelzgut (06) vor der Schmelzgutaufgabe (13) eine Vorstufe, insbesondere eine Trocknungsvorrichtung (08), durchläuft, wobei in der Vorstufe die Temperatur des Schmelzgutes (06) erhöht und/oder der Feuchtegehalt reduziert wird.

14. Vorwärmvorrichtung (01, 11) nach Anspruch 13,
**dadurch gekennzeichnet,**
**dass** in der Trocknungsvorrichtung (08) erwärmte Luft (10) direkt in das Schmelzgut (06) eingeleitet wird, wobei aus dem Schmelzgut (06) freiwerdender Wasserdampf mit der Luft (10) aus der Trocknungsvorrichtung (08) abgeführt wird.

15. Vorwärmvorrichtung (01, 11) nach Anspruch 14,
**dadurch gekennzeichnet,**
**dass** die Vorwärmvorrichtung einen Luftwärmer (09) umfasst, der von Luft (10) durchströmt wird, wobei Wärme aus dem Rauchgas (07) indirekt auf die Luft (10) übertragen werden kann.

16. Vorwärmvorrichtung (01, 11) nach Anspruch 15,
**dadurch gekennzeichnet,**
**dass** der Luftwärmer (09) mit einem flächigen Kontakt am Wärmetauscher (03) angebracht ist.
